(19) **Europäisches Patentamt**

**European Patent Office**

**Office européen des brevets**

(11) Publication number: **0 161 706**
**B1**

(12) **EUROPEAN PATENT SPECIFICATION**

(45) Date of publication of patent specification: **19.07.89**

(51) Int. Cl.⁴: $H\ 04\ N\ 9/097$

(21) Application number: **85200583.4**

(22) Date of filing: **16.04.85**

(54) **Colour television camera comprising a plurality of pick-up elements.**

(30) Priority: **24.04.84 NL 8401309**

(43) Date of publication of application:
**21.11.85 Bulletin 85/47**

(45) Publication of the grant of the patent:
**19.07.89 Bulletin 89/29**

(84) Designated Contracting States:
**DE FR GB IT**

(56) References cited:
**FR-A-1 577 746**
**US-A-3 381 084**

(73) Proprietor: **N.V. Philips' Gloeilampenfabrieken**
**Groenewoudseweg 1**
**NL-5621 BA Eindhoven (NL)**

(72) Inventor: **Geerts, Wilhelmus Hendrikus Maria**
**c/o Int. Octrooibureau B.V. Prof. Holstlaan 6**
**NL-5656 AA Eindhoven (NL)**
Inventor: **Stok, Filippus Leon**
**c/o Int. Octrooibureau B.V. Prof. Holstlaan 6**
**NL-5656 AA Eindhoven (NL)**
Inventor: **Tienkamp, Engbert**
**c/o Int. Octrooibureau B.V. Prof. Holstlaan 6**
**NL-5656 AA Eindhoven (NL)**

(74) Representative: **Steenken, Jacob Eduard et al**
**INTERNATIONAAL OCTROOIBUREAU B.V. Prof.**
**Holstlaan 6**
**NL-5656 AA Eindhoven (NL)**

## Description

The invention relates to a colour television camera comprising a plurality of pick-up elements for converting an optical image on a pick-up area of the pick-up elements into an electric picture signal, the optical images being obtained by means of an optical colour separation system provided in an optical path for scene light, optical axes as centre axes of the scene light directed to the centre of the images being directed to the pick-up areas, the camera comprising a test image projector for obtaining a test image on the pick-up areas *via* the optical colour separation system and comprising an adjusting circuit coupled to the pick-up elements for obtaining with the aid of the test images synchronous picture signals with an optimum picture coverage on joint display.

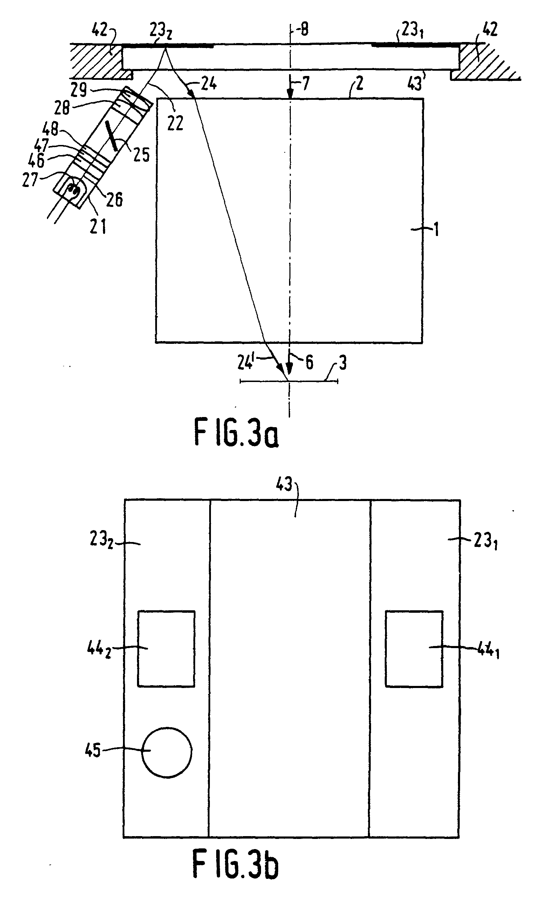

Such a colour television camera is disclosed in French Patent FR—A—1,577,746, more specifically in Figure 3 for the colour separation system and the test image projector. Herein, a wheel provided with a transparent, optical filter plane and an opaque plane which is a reflecting surface on the side facing the colour separation system is arranged in front of a light entrance face of the colour separation system. During scene recording, the transparent filter plane of the wheel is present in the optical path to the colour separation system. During the adjustment for obtaining the synchronous picture signals, that is to say that upon a collective display of the adjusted picture signals, sub-pictures are obtained with an optimum registration, the opaque plane of the wheel is present as a shutter in the optical path which is thus blocked for light coming from the scene. The operative test image projector is then directed to the reflecting wheel plane, which reflects the light from the test image in the direction of said optical axis at the light entrance face. As a result thereof, the test images and the scene pictures are produced on the pick-up areas of the pick-up elements along the same optical axes. In the drawing the wheel is provided between an optical lens system and the optical colour separation system.

Arranging the reflecting shutter between the optical lens system and the optical colour separation system is considered to be a disadvantage, as it is desirable to keep the optical path as short as possible. When the optical path is kept as short as possible, a more compact construction is obtained so that less imaging errors occur in the optical path. Advantageously, the shutter is arranged before the optical lens system, but the presence of the wheel as a mechanical unit during the adjustment is a disadvantage. So as to enable an unobstructed rotation of the wheel between the lens system and the colour separation system, prior to and after the adjustment, some mechanical tolerance is necessary, which again increases the length of the optical path.

The invention has for its object to provide a colour television system having a shortest possible optical path in the optical lens and colour separation system, no additional mechanically movable element being present for said adjustment.

According to the invention, a colour television camera of the aforementioned kind is characterized in that the light coming from the test image projector is incident on the colour separation system at an oblique angle with respect to the said optical axes and consequently strikes the pick-up areas at an oblique angle with respect to said optical axes of the scene light, the camera comprising for the purpose of obtaining an optimum synchronization between the picture signals pre-compensation means for imaging errors caused by the oblique angle of incidence of the light on the pick-up areas of the pick-up elements.

Because of the fact that the light from the test image is incident at an oblique angle with respect to the optical axis associated with the scene light there is no need for the described move, prior to and after the adjustment of a light-reflecting plane in the optical path of the scene light. The optical imaging errors caused by the oblique angle of incidence, are optically and/or electrically pre-compensated for with the aid of the pre-compensation means. This pre-compensation must be adjusted once by the camera producer. It may be necessary to repeat this adjustment when, for example, a pick-up element is replaced by another element. After the pre-compensation has been adjusted, the adjusting circuit for synchronizing the picture signals is operative in known manner.

An embodiment of a colour television camera according to the invention in which the optical system is of a still greater compactness, is characterized in that in the television camera there is present outside the optical path for the scene light a light-reflecting plane to which the test image projector is directed, the light reflected from the test image being present in the colour separation system at an oblique angle relative to said optical axes.

An optical precompensation for the imaging errors at the pick-up areas of the pick-up elements is obtained in an embodiment of the camera in accordance with the invention which is characterized in that in the test image projector a slide is provided as a pre-compensation means at an oblique angle with respect to the optical axis of a light beam in the projector.

A different optical pre-compensation is obtained in an embodiment which is characterized in that the test image projector comprises a cylindrical plano-convex correction lens as a precompensation means.

An embodiment of a camera according to the invention comprising an electrical pre-compensation, is characterized in that the adjusting circuit for the synchronism of the picture signals comprises memory circuits as pre-compensation means.

A further embodiment is characterized in that a memory circuit for scan adjustment is provided at an input of a circuit for the electronic scanning of the pick-up area of a pick-up element.

A still further embodiment is characterized in that a memory circuit comprises an adjustable constant d.c. voltage-carrying potentiometer.

A simple feature for adjusting the pre-compensation at the adjusting circuit is realized in a camera which is characterized in that the pre-compensation means provided at the adjusting circuit can be switched off.

The invention will now be further described by way of example with reference to the accompanying drawings, in which

Figure 1 is a block schematic circuit diagram of an embodiment of a colour television camera according to the invention,

Figure 2 illustrates in greater detail a portion of an adjusting and scanning circuit of the camera of Figure 1, comprising a disconnectable pre-compensation means in the form of a potentiometer used as an adjustable memory circuit, and

Figures 3a and 3b show in greater detail a test image projector with optical pre-compensation means and projection into the optical system.

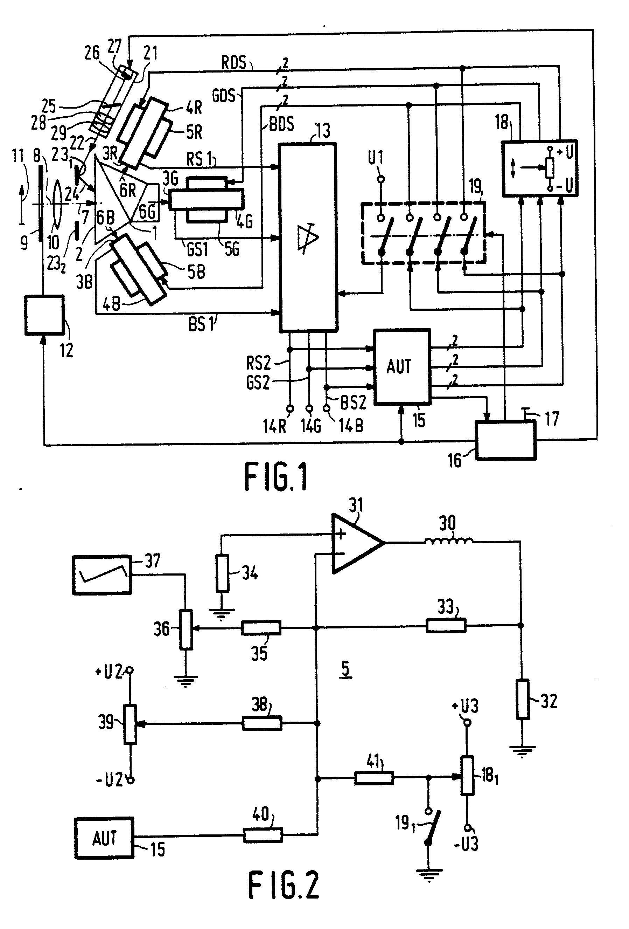

In the block schematic circuit diagram shown in Figure 1 of an embodiment of a colour television camera according to the invention, only those components are shown which are relevant to the explanation of the invention. Reference numeral 1 denotes a colour separation system which is formed in known manner by, for example, prisms. The system 1 has a light entrance face 2 and three light exit faces to which pick-up areas 3R, 3G and 3B, respectively of the respective pick-up elements 4R, 4G and 4B are contiguous. Provided at the pick-up elements 4R, 4G and 4B are electronic scanning means denoted by 5R, 5G and 5B, respectively, with the aid of which an optical image on a pick-up area 3 is converted into an electric picture signal denoted by RS1, GS1 and BS1, respectively. The specific construction of the pick-up elements 4 and of the scanning means 5 are only important to the invention in so far that it determines only the measures by means of which synchronism of the picture signals RS1, GS1 and BS1 is obtained. When there is optimum synchronism, sub-pictures which are in an optimum registration are obtained when the picture signals RS1, GS1 and BS1 are displayed together. When the pick-up elements 4 are in the form of pick-up tubes with electron beam scanning of the pick-up areas 3, the scanning means 5 being provided as electron beam deflection means, shift currents and voltages, respectively for the line and field deflections are required to obtain picture signal synchronism. When the pick-up elements 4 are in the form of solid state pick-up devices the scanning means 5 comprise one or more clock pulse sources to control the scan. When scanning is effected by means of a cross-bar system and line and field shift registers connected thereto, the picture signal synchronism can be obtained by operating the shift registers locally adapted across the picture, that is to say the shift registers which start operation simultaneously begin in different places. When charge transfer devices are used, the information components then being serially shifted through rows of pick-up elements, the places where the line and field scanning start can also be locally adapted. In addition, the synchronism during the line scan can be obtained by means of a variable delay device. For simplicity of the description of the invention, which will become apparent from the description of Figure 2, it is based on pick-up elements 4 in the form of a pick-up tube. Then, the scanning means 5R, 5G and 5B each have two inputs to which a line and field scan shift current or voltage RDS, GDS and BDS, respectively are applied.

At the pick-up areas 3R, 3G and 3B optical axes 6R, 6G and 6B are designated by means of arrows directed thereto, which axes are assumed to be the centre axes of the scene light beams directed to the centre of the images. A corresponding optical axis at the entrance face 2 is denoted by 7. The optical axis 7 is the centre axis of an optical path 8 for scene light in which a diaphragm 9 and a lens system 10 are assumed to be present, in addition to the colour separation system 1. Reference numeral 11 in Figure 1 designates an arrow which on the one hand represents a scene to be recorded and to be displayed or on the other hand a test plate which is provided for the purpose of adjusting the camera. The diaphragm 9 is controlled by a control circuit 12.

The picture signals RS1, GS1 and BS1 are applied to a signal processing circuit 13 which, as is shown, comprises variable-gain and controllable amplifier circuits. The signal processing operations effected in circuit 13 are not further described. It is shown that the circuit 13 supplies three signals RS2, GS2 and BS2, which are derived from the respective signals RS1, GS1 and BS1. The signals RS2, GS2 and BS2 become available at terminals 14R, 14G and 14B for further signal processing operations in the camera shown in Figure 1 and for application to and display on picture display devices. In addition, the signals RS2, GS2 and BS2 are applied in accordance with Figure 1 to an adjusting circuit for adjusting the picture signal synchronism, the circuit comprising an automatic circuit 15 (AUT), a control circuit 16 having a start button 17, a pre-compensation circuit 18 and a switching circuit 19. In an adjusting circuit (15—19) thus formed the control circuit 16 does not only control the circuit 15 and the switching circuit 19 but also the diaphragm control circuit 12. The circuit 16 further applies a supply voltage to a test image projector 21. The circuit 15 is shown to have three pairs of outputs which are coupled to a like number of inputs of the scanning means 5R, 5G and 5B *via* the pre-compensation circuit 18 and the switching circuit 19 which is provided *inter alia* as a short-circuiting means thereof. As can be seen from the drawing, the automatic circuit 15 has an output which is connected to an input of the control circuit 16 and through which it is reported that the adjusting procedure has been completed. A different solution is a solution in which the circuit 15 is always operative for the same period of time, which period is of such a duration that the optimum adjustment is obtained therein without fail. The switching circuit 19 is further used to apply a constant d.c. voltage UI to the signal processing circuit 13 during the automatic operation of the adjusting circuit (15—19). In the circuit 13 the voltage U1 is operative as a gain setting voltage.

If the test image projector 21 and the precompensation circuit 18 were absent, the arrow 11 then representing a test plate, the colour television camera of Figure 1 can be adjusted with the aid of the automatic circuit 15 in a manner as described in United States Patent US—A—3,987,482. The switching circuit 19 is then in the switched-on state and the diaphragm 9 is open. Such an adjustment, which must be regularly repeated, using an external test plate (11) arranged in front of the camera has generally disadvantages of a nature described in European Patent Application 84 195. Said application describes, by way of a solution, the use of the internal test image projector for the recurrent adjustments and the use of what is referred to as a lens memory which is filled non-recurrently with lens correction information using the external test plate. This solution is equally suitable for use in the adjusting procedure described in said French Patent Specification FR—A—1,577,746, the internal test image being projected between the lens system and the colour separation system, by means of a mirror.

In accordance with one aspect of the invention, the adjusting circuit (15—19) comprises the precompensation circuit 18 which has for its object to provide a precompensation of optical imaging errors on the pick-up areas 3 of the pick-up element 4. These optical imaging errors are caused by the specific manner in which the test image projector 21 produces test images on the respective pick-up areas 3R, 3G and 3B. In Figure 1 reference numeral 22 denotes the optical axis of the light from the test image produced by the test image projector 21. In the television camera a light-reflecting plane $23_1$ is present outside the optical path 8, the test image projector 21 being directed to that plane. Figure 1 shows that the optical axis 24 at the light entrance face 2 of the system 1 is at an oblique angle relative to the optical axis 7 of the optical path 8. The optical axes 6R, 6G and 6B of the respective pick-up areas 3R, 3G and 3B are associated with the optical axis 7, so that the light from the test image is incident on these pick-up areas at an oblique angle. This produces optical imaging errors on the pick-up areas 3R, 3G and 3B.

In Figure 1, the test image projector 21 is directed to the reflecting plane $23_1$ but it might alternatively be directed, as shown in Figure 3a, with equal results to a light reflecting plane $23_2$ located on the other side of the optical path 8. In the manner still further to be described with reference to Figure 3b, the planes $23_1$ and $23_2$ are

provided for the purpose of additional illumination when the pick-up elements 4 are in the form of a pick-up tube. Projecting the test image with the aid of one of the planes 23 has, because of the folded character of the light beam, the advantage of a shorter optical path as compared with a direct projection into the colour separation system 1.

The imaging errors caused by the oblique angle at which the light is incident on the pick-up areas 3 can be optically pre-compensated for. To illustrate this, Figure 1 schematically shows in the test image projector 21 two possible pre-compensations. In the test image projector 21 a slide 25 is arranged as a first pre-compensation means obliquely with respect to an optical axis 26 of a light beam produced in the projector 21 by a projector lamp 27. The angle of tilt, as regards its direction and degree is obtained in accordance with the so-called Scheimpflug condition, as a result of which the law: a small object distance relative to a lens requires a large image distance and a large object distance requires a small image distance, is obeyed to a better extent. The slide 25 is followed as a second pre-compensation means by a cylindrical plano-convex correction lens 28, which is followed by a double convex imaging lens 29. The lenses 28 and 29 may be interchanged, which also holds for the plane and the convex faces of the lens 28. The lens 28 substantially compensates for the astigmatism caused by the oblique position of the slide 25 with respect to the optical axis 26, which astigmatism results in unsharpness in the optical images on the pick-up areas 3.

For the electrical pre-compensation of the imaging errors caused by the oblique angle of incidence of the light on the pick-up areas, Figure 2 shows a circuit which is suitable for use when the pick-up elements 4 are in the form of a pick-up tube. The scanning means 5 and the automatic circuit 15 already shown and described with reference to Figure 1 are denoted in Figure 2 by the same reference numerals. Reference numeral $18_1$ is a pre-compensation means in the form of a memory circuit, constituted by a potentiometer. An associated switch for switching-off the pre-compensation means is denoted by $19_1$. Let it be assumed that the circuit in accordance with Figure 2 provides for the field or vertical scanning of a pick-up element 4. Reference numeral 30 denotes a deflection coil for an electron beam in a pick-up tube. The deflection coil 30 is connected to the output of a differential amplifier 31 and by means of its other side to ground via a resistor 32. The junction of the coil 30 and the resistor 32 is fed back via a resistor 33 to the (−) output of the amplifier 31, whose (+) input is connected to ground via a resistor 34. Via a resistor 35 the (−) input of the amplifier 31 is connected to a tap of a potentiometer 36, which is connected between an output of a sawtooth voltage source 37 and ground. The source 37 applies a sawtooth current through the deflection coil 30 for the electron beam via the fed back amplifier 31. The (−) input of the amplifier 31 is connected via a resistor 38 to a tap of a potentiometer 39, which is connected between terminals carrying constant d.c. voltages +U2 and —U2. The potentiometer 39 is used for centring purposes for the electron beam deflection by applying an adjustable constant direct current through the deflection coil 30 via the resistor 38. The (—) input of the amplifier 31 is connected to an output of the automatic circuit 15 via a resistor 40 and is further connected to a tap of the potentiometer $18_1$ via a resistor 41. The potentiometer $18_1$ is connected between terminals which carry constant d.c. voltages +U3 and —U3. The tap of the potentiometer $18_1$ is connected to ground via the circuit $19_1$. When the switch is in the closed condition, the potentiometer $18_1$ is inoperative. The components 30 to 39 of Figure 2 are assumed to be present in the scanning means 5 of Figure 1.

A possible mode of adjusting the camera according to Figure 1 will be described with reference to the Figures 1 and 2. After the control circuit 16 has been activated by means of the start button 17, the diaphragm 9 is closed via the control circuit 12, the test image projector 21 is made operative and the switching circuit 19 is closed. All the switches in the switching circuit 19 are closed for short-circuiting purposes ($19_1$ of Figure 2) or for applying the constant gain setting voltage U1 to the circuit 13. Thereafter, the potentiometer 39 is readjusted such that the automatic circuit 15 is approximately halfway the control range.

Thereafter the automatic circuit 15 becomes operative, as described in the above-mentioned United States Patent US—A—3,987,482. The circuit 15 provides such a shift current through the deflection coil(s) 30 that synchronism of the signals RS2, GS2 and BS2 occurs.

Thereafter, the automatic circuit 15 and the test image projector 21 are switched-off, the diaphragm 9 is opened and the switching circuit 19 is opened. The external test image (arrow 11) is recorded by the camera through the diaphragm 9. The potentiometer $18_1$ is now readjusted so far, either manually or by means of an automatic circuit, not further shown, that the signals RS2, GS2 and BS2 are again in synchronism. This implies that the camera is in the adjusted state.

The pre-compensation circuit 18 is, as is mentioned above, adjusted once with the aid of an external test image. The described simple adjusting feature of the pre-compensation is provided by the switch-off capability of the pre-compensation means 18 (switch $19_1$). After the pre-compensation adjustment the circuit 15 is operative in known manner, when adjustment is desired, the test image projector 21 then being operative, the diaphragm 9 being closed and the pre-compensation circuit 18 being in the switched-on state. Readjustment of the pre-compensation may be necessary, when, for example, a pickup element 4 is replaced.

In Figures 1 and 2 the pre-compensation is obtained by means of the adjustable potentiometers (18, $18_1$) which carry a constant d.c. voltage. The potentiometers act as memory circuits. For a different embodiment thereof it is, for example, possible to use a digital memory followed by a digital-to-analogue converter. The memory circuit is also then provided for scan adjustment purposes at an input of a circuit (30—39) for the electronic scan at the pick-up area 3 of a pick-up element 4.

Figure 3a shows in greater detail an embodiment of the test image projector 21, together with the reflecting planes $23_1$ and $23_2$, Figure 3b shows these planes as seen from the colour separation system. Components already described with reference to Figure 1 are given the same reference numerals in Figures 3a and 3b. The oblique angle of incidence onto the pick-up areas 3 is denoted in Figure 3a by 24'.

A retarding plate 43 is provided in a housing 42. Opaque, light-reflecting planes $23_1$ and $23_2$ are provided on the transparent plate 43. The plate 43 is, for example, a quartz plate for anti-polarization of transmitted light and for infrared filtration. As a result thereof, quasi-depolarized, visible light is applied to the colour separation system 1. The planes $23_1$ and $23_2$ are provided primarily to obtain additional illumination of the pick-up areas 3, the infrared filtration also being important. In Figure 3b reference numerals $44_1$ and $44_2$ denote areas via which the additional illumination is obtained by reflection. In accordance with one aspect of the invention, a portion of a plane $23_1$ and $23_2$, respectively is utilized for the oblique angle at which the test image is projected, which portion is the area 45 of the plane $23_2$. Figures 3a and 3b, which have a vertically arranged plate 43 show that the light is projected along the optical axis 24, which extends at an oblique angle, up to the right with respect to the optical axis 7.

Figure 3a shows that in the test image projector 21 an infrared filter 46, an opal glass plate 47 and a glass plate 48 for colour temperature correction of the lamp 27 are arranged between the lamp 27 and the test image slide 25. The infrared filter 46 has a lower cut-off frequency for infrared radiation than has the plate 43.

## Claims

1. A colour television camera comprising a plurality of pick-up elements for converting an optical image on a pick-up area of the pick-up elements into an electric picture signal, the optical images being obtained by means of an optical colour separation system provided in an optical path for scene light, optical axes as centre axes of the scene light directed to the centre of the images being directed to the pick-up areas, the camera comprising a test image projector for obtaining a test image on the pick-up areas via the optical colour separation system and comprising an adjusting circuit coupled to the pick-up elements for obtaining with the aid of the test images synchronous picture signals with an optimum picture coverage on joint display, characterized in that the light coming from the test image projector is incident on the colour separation system at an oblique angle with respect to the said optical axes and consequently strikes the pick-up areas at an oblique angle with respect to said optical axes of the scene light, the camera comprising for the purpose of obtaining an optimum synchronization between the picture signals pre-compensation means for imaging errors caused by the oblique angle of incidence of the light on the pick-up areas of the pick-up elements.

2. A colour television camera as claimed in Claim 1, characterized in that in the television camera there is present outside the optical path for the scene light a light reflecting plane to which the test image projector is directed, the light reflected from the test image being present in the colour separation system at an oblique angle relative to said optical axes.

3. A colour television camera as claimed in Claim 1 or 2, characterized in that in the test image projector a slide is provided as a pre-compensation means at an oblique angle with respect to the optical axis of a light beam in the projector.

4. A colour television camera as claimed in any one of the preceding Claims, characterized in that the test image projector comprises a cylindrical plano-convex correction lens as a pre-compensation means.

5. A colour television camera as claimed in any one of the preceding Claims, characterized in that the adjusting circuit for the synchronism of the picture signals comprises memory circuits as pre-compensation means.

6. A colour television camera as claimed in Claim 5, characterized in that a memory circuit for scan adjustment is provided at an input of a circuit for the electronic scanning of the pick-up area of a pick-up element.

7. A colour television camera as claimed in Claim 5 or 6, characterized in that a memory circuit comprises an adjustable constant d.c. voltage-carrying potentiometer.

8. A colour television camera as claimed in any one of the preceding Claims, characterized in that the pre-compensation means provided at the adjusting circuit can be switched off.

## Patentansprüche

1. Farbfernsehkamera mit mehreren Aufnahmeelementen zum Umwandeln eines optischen Bildes auf einem Aufnahmegebiet der Aufnahmeelemente in ein elektrisches Bildsignal, wobei die optischen Bilder mittels eines optischen Farbtrennsystems in dem optischen Weg des Szenenlichtes erhalten werden, wobei die optischen Achsen als die Zentralachsen des zu der Mitte der Bilder gerichteten Szenenlichtes auf die Aufnahmegebiete gerichtet werden, wobei die Kamera einen Testbildprojektor aufweist zum durch das optische Farbtrenn system Erhalten eines Testbildes auf den Aufnahmegebieten sowie einen mit den Aufnahmeelementen gekoppelten Einstellkreis zum mit Hilfe der Testbilder Erhalten synchroner Bildsignale mit einer optimalen Bilddeckung an einer Gesamtwiedergabe, dadurch gekennzeichnet, dass das von dem Testbildprojektor herrührende Licht in einem schiefen Winkel in bezug auf die genannten optischen Achsen auf das Farbtrenn-system auftrifft und folglich die Aufnahmegebiete in einem schiefen Winkel in bezug auf die genannten optischen Achsen des Szenenlichtes streift, wobei die Kamera zum Erhalten einer optimalen Synchronisation zwischen den Bildsignalen Vorausgleichsmittel für die diejenigen Bild- fehler aufweist, die durch die schiefen Eintreffwinkel des Lichtes auf den Aufnahmegebieten der Aufnahmeelemente verursacht werden.

2. Farbfernsehkamera nach Anspruch 1, dadurch gekennzeichnet, dass in der Fernsehkamera ausserhalb des optischen Szenenlichtweges eine Lichtreflexionsfläche vorhanden ist, auf die der Testbildprojektor gerichtet ist, wobei das von dem Testbild reflektierte Licht in einem schiefen Winkel gegenüber den genannten optischen Achsen in dem Farbtrennsystem vorhanden ist.

3. Farbfernsehkamera nach Anspruch 1 oder 2, dadurch gekennzeichnet, dass in dem Testbildprojektor als Vorausgleichsmittel in einem schiefen Winkel gegenüber der optischen Achse eines Lichtstrahles in dem Projektor ein Dia vorhanden ist.

4. Farbfernsehkamera nach einem der vorstehenden Ansprüche, dadurch gekennzeichnet, dass der Testbildprojektor als Vorausgleichsmittel eine zylindrische plankonvexe Korrektionslinse aufweist.

5. Farbfernsehkamera nach einem der vorstehenden Ansprüche, dadurch gekennzeichnet, dass der Einstellkreis zur Synchronisierung der Bildsignale als Vorausgleichsmittel Speicherschaltungen aufweist.

6. Farbfernsehkamera nach Anspruch 5, dadurch gekennzeichnet, dass an einem Eingang einer Schaltungsanordnung zur elektronischen Abtastung des Aufnahmegebietes eines Aufnahmeelementes eine Speicherschaltung zur Einstellung der Abtastung vorgesehen ist.

7. Farbfernsehkamera nach Anspruch 5 oder 6, dadurch gekennzeichnet, dass eine Speicherschaltung ein Einstellpotentiometer mit konstanter Gleichspannung aufweist.

8. Farbfernsehkamera nach einem der vorstehenden Ansprüche, dadurch gekennzeichnet, dass die Vorausgleichsmittel an der Einstellschaltung abschaltbar sind.

## Revendications

1. Caméra de télévision couleur comprenant plusieurs éléments de prise de vue destinés à convertir une image optique sur une zone de prise de vue des éléments de prise de vue en un signal d'image électrique, les images optiques étant obtenues au moyen d'un système de séparation de couleurs optique prévu dans un trajet optique pour de la lumière de scène, des axes optiques, en tant qu'axes centraux de la lumière de scène dirigée vers le centre des images, étant dirigés vers les zones de prise de vue, la caméra comprenant un projecteur d'image d'essai permettant d'obtenir une image d'essai sur les zones de prise de vue par l'intermédiaire du système de séparation optique de couleurs et comprenant un circuit de réglage couplé aux éléments de prise de vue pour obtenir, à l'aide des images d'essai, des signaux d'image synchrones présentant une couverture d'image optimale lors d'une visualisation commune, caractérisée en ce que la lumière provenant du projecteur d'image d'essai frappe le système de séparation de couleurs sous un angle d'obliquité par rapport aux axes optiques et frappe, par conséquent, les zones de prise de vues en formant un angle d'obliquité avec les axes optiques de la lumière de la scène, la caméra comprenant, en vue de l'obtention d'une synchronisation optimale entre les signaux d'image, des moyens de précompensation des erreurs d'imagerie causées par l'angle d'obliquité d'incidence de la lumière sur les zones de prise de vues des éléments de prise de vues.

2. Caméra de télévision couleur suivant la revendication 1, caractérisée en ce que la caméra de télévision contient, à l'extérieur du trajet optique pour la lumière de la scène, un plan réfléchissant la lumière vers lequel le projecteur d'image d'essai est dirigé, la lumière réfléchie provenant de l'image d'essai étant présente dans le système de séparation de couleurs sous un angle d'obliquité par rapport aux axes optiques.

3. Caméra de télévision couleur suivant la revendication 1 ou 2, caractérisée en ce que, dans le projecteur d'image d'essai est prévu un coulisseau à titre de moyen de précompensation sous un angle d'obliquité par rapport à l'axe optique d'un faisceau de lumière dans le projecteur.

4. Caméra de télévision couleur suivant l'une quelconque des revendications précédentes. caractérisée en ce que le projecteur d'image d'essai comprend une lentille de correction planconvexe cylindrique à titre de moyen de précompensation.

5. Caméra de télévision couleur suivant l'une quelconque des revendications précédentes, caractérisée en ce que le circuit de réglage destiné à la synchronisation des signaux d'image comprend des circuits de mémoire à titre de moyens de précompensation.

6. Caméra de télévision couleur suivant la revendication 5, caractérisée en ce qu'un circuit de mémoire pour le réglage de balayage est prévu à une entrée d'un circuit pour le balayage électronique de la zone de prise de vue d'un élément de prise de vue.

7. Caméra de télévision couleur suivant la revendication 5 ou 6, caractérisée en ce qu'un circuit de mémoire comprend un potentiomètre réglable portant une tension continue constante.

8. Caméra de télévision couleur suivant l'une quelconque des revendications précédentes, caractérisée en ce que le moyen de précompensation prévu au niveau du circuit de réglage peut être coupé.

FIG.1

FIG.2

FIG.3a

FIG.3b